# EUROPEAN PATENT APPLICATION

(11) **EP 4 817 718 A1**
(43) Date of publication of application: **07.10.2026**
(21) Application number: 25461518.0
(22) Date of filing: 04.04.2025
(51) Int. Cl.: B01D 29/21, B01D 35/153, B01D 35/16

(54) **FILTER SYSTEM FOR FILTERING FLUIDS AND FILTER ELEMENT**

(71) Applicant: MANN+HUMMEL GmbH, 71636 Ludwigsburg (DE)
(72) Inventor: EBERTSEDER, Stefan, 71636 Ludwigsburg (DE); KUSEBAUCH, Robert, 71636 Ludwigsburg (DE); KRIEGER, Eva-Maria, 71636 Ludwigsburg (DE); SCHÖMMEL, Jörg, 71636 Ludwigsburg (DE); GESSNER, Christof, 71636 Ludwigsburg (DE); KOCH, Ingo, 71636 Ludwigsburg (DE); WERYSZKO, Adam, 71636 Ludwigsburg (DE); KUBIAK, Michal, 71636 Ludwigsburg (DE); SIKORA, Kamil, 71636 Ludwigsburg (DE); GRZELCZYK, Lukasz, 71636 Ludwigsburg (DE); FELEDZIAK, Wojciech, 71636 Ludwigsburg (DE); IREIZ, Miralem, 71636 Ludwigsburg (DE); AHMETAGIC, Adnan, 71636 Ludwigsburg (DE); HALILOVIC, Velid, 71636 Ludwigsburg (DE); SCHMID, Daniel, 71636 Ludwigsburg (DE)
(74) Representative: Mann + Hummel Intellectual Property

(57) **Abstract**

The invention relates to a filter system (100) for filtering fluids, in particular a liquid filter system, comprising a filter housing (110) with a first housing part (112) and a second housing part (114), having a raw fluid inlet (105), a central fluid outlet (104) and a component, in particular an eccentric fluid drainage opening (106), the fluid outlet (104) and the component being arranged at the second housing part (114), a central standpipe (120) with a top portion (122) arranged above the fluid outlet (104), the top portion (122) providing an inclined control surface (124), a filter element (10) comprising a center tube (40) being arranged in the interior (14) of the filter element (10), and comprising a contact element (42), in particular arranged inside the center tube (40), pointing to the second end cap (18) and at least a second positioning means (44). The invention further relates to a filter element (10).

## Description

### Technical Field

The invention relates to a filter system for filtering fluids, in particular a liquid filter system, as well as to a filter element for a filter system.

### Prior Art

Rotational orientation of fluid filter elements alongside their longitudinal axis in filter housings is usually done by a radial inwards protruding guiding element on the center tube. The guiding element gets oriented first on a, compared to the axial movement or end cap orientation, inclined plane on a fixed standpipe in the filter housing. Once the desired rotational angle of the filter element is reached a further downward movement is enabled by an axial slot in the housing standpipe. This enables a pin shaped sealing contour on the bottom end cap to engage and seal a drainage pipe opening in the filter housing.

US 2014/0183116 A1 discloses a fluid filter that is characterized in that a central standpipe is a separate component that can be connected to a clean liquid outlet by a plug connection, first positioning means are provided on the central clean liquid outlet and on a lower end region of the standpipe that, when the standpipe is plugged into the clean liquid outlet, guide the standpipe into a particular position in the circumferential direction relative to the filter housing, second positioning means are provided on the outer circumference of the standpipe and on the inner circumference of the filter insert that, when the filter insert is plugged onto the standpipe, guide the filter insert into a particular position in the circumferential direction relative to the standpipe, and the first and second positioning means are matched to one another in such a way that the closing pin on the filter insert enters into engagement with the eccentric fluid discharge channel in the filter housing.

### Disclosure of the Invention

It is an object of the invention to provide an improved filter system for filtering fluids, in particular a liquid filter system.

Another object is to provide an improved filter element for an improved filter system for filtering fluids, in particular a liquid filter system.

According to an aspect of the invention the object is achieved by a filter system for filtering fluids, in particular a liquid filter system, comprising a filter housing having a longitudinal axis, with a first housing part and a second housing part arranged along the longitudinal axis, having a raw fluid inlet, a central fluid outlet and an eccentric fluid drainage opening, the fluid outlet and the fluid drainage opening being arranged at the second housing part, a central standpipe arranged above the fluid outlet, having a top portion providing a control surface, the control surface being inclined with respect to the longitudinal axis, a filter element being operably accommodated in the filter housing, the filter element comprising a filter media body with an open interior extending along the longitudinal axis, the filter element comprising a first end cap and an opposing second end cap, being separated in the longitudinal axis, wherein the second end cap is configured with at least one positioning means, the filter element further comprising a center tube being arranged in the interior of the filter element, and comprising a contact element for contacting the control surface of the central standpipe with a contact surface, in particular the contact element being arranged inside the center tube, pointing to the second end cap and at least a second positioning means, wherein the center tube is movable along the longitudinal axis from a first starting position to a second end position inside the filter element, wherein the center tube is in the first position where the second positioning means is engaged with the first positioning means of the second end cap or in the second position where the second positioning means is released from the first positioning means.

According to a further aspect of the invention the another object is achieved by a filter element for a filter system for filtering fluids, in particular a liquid filter system, comprising a filter media body with an open interior extending along a longitudinal axis, comprising a first end cap and an opposing second end cap, being separated in the longitudinal axis, wherein the second end cap is configured with at least one positioning means, and comprising a center tube being arranged in the interior of the filter element, and being configured with a contact element, in particular being arranged inside the center tube, pointing to the second end cap and at least a second positioning means, wherein the center tube is movable along the longitudinal axis from a first position to a second position inside the filter element, wherein the center tube is in the first starting position where the second positioning means is engaged with the first positioning means of the second end cap or in the second end position where the second positioning means is released from the first positioning means.

Advantageous embodiments are described in the dependent claims, the description and the drawings.

A filter system for filtering fluids, in particular a liquid filter system, is proposed, comprising
a filter housing having a longitudinal axis, with a first housing part and a second housing part arranged along the longitudinal axis, having a raw fluid inlet, a central fluid outlet and an eccentric fluid drainage opening, the fluid outlet and the fluid drainage opening being arranged at the second housing part, a central standpipe arranged above the fluid outlet, having a top portion providing a control surface, the control surface being inclined with respect to the longitudinal axis, a filter element being operably accommodated in the filter housing, the filter element comprising a filter media body with an open interior extending along the longitudinal axis. The filter element comprises a first end cap and an opposing second end cap, being separated in the longitudinal axis,. The second end cap is configured with at least one positioning means. The filter element further comprises a center tube being arranged in the interior of the filter element, and comprising a contact element for contacting the control surface of the central standpipe with a contact surface, in particular the contact element being arranged inside the center tube, pointing to the second end cap and at least a second positioning means. The center tube is movable along the longitudinal axis from a first starting position to a second end position inside the filter element. The center tube is in the first position where the second positioning means is engaged with the first positioning means of the second end cap or in the second position where the second positioning means is released from the first positioning means.

The filter element of the proposed filter system, e.g. an oil filter system, comprises a pre-assembled two-staged second end cap and center tube that enables alignment of the filter element to the filter housing by an inclined plane in the center tube orienting itself on the filter housing's standpipe's inclined control surface. After initial orientation of the filter element the second end cap disengages along the longitudinal axis from the center tube while still being prohibited from rotational movement compared to the center tube to keep orientation. This allows e.g. a sealing pin as an actuating element on the second end cap to engage and seal a drainage pipe opening in the filter housing's bottom.

The second end cap is constantly being pushed downwards by the first filter housing part while it is turned and screwed into the second filter housing part. The force gets transferred by the filter media body to the end cap with the actuating element and after radial alignment of the filter element the center tube is moved away from the second end cap.

Thus, orientation of the filter element on the standpipe inside of the filter housing without any inward protruding pin on the center tube is achieved by rotating the whole filter element until the slanted control surface of the center tube is aligned flush with the slanted control surface of the standpipe.

The standpipe may be configured having a closed wall. Alternatively, the standpipe could also be configured with one or more recesses or one or more slots in the wall, in particular with one or more slots in longitudinal direction.

Longitudinal or axial direction means in direction of or parallel to the longitudinal direction of the filter system.

The filter element is a serviceable part of the filter system.

The second end cap and the center tube may be a pre-assembled part of the filter element. Alternatively, the center tube may be loosely placed in the first end cap before mounting.

According to a favorable embodiment of the filter system, the second end cap may comprise an eccentrically positioned actuating element, the actuating element being configured for direct or indirect cooperation with a component when the filter element is arranged in an intended mounting position in the filter housing. In particular, the actuating element may be a sealing pin being configured for closing the drainage opening when the filter element is arranged in an intended mounting position in the filter housing. The actuating element, e.g., may be configured for axial engagement or for engagement along a curved contour.

Favorably, after the rotational orientation is complete, a frictional or removably formed connection, e.g. a slant or a snap hook, between the end cap and the center tube allows for guided axial movement after orientation for activating e.g. a valve or a sensor or a switch or another component, thus as sealing of the drainage opening with an axial sealing pin on the end cap.

According to a favorable embodiment of the filter system, the control surface of the standpipe and the contact surface of the corresponding contact element of the center tube may have similar inclination angles with respect to the longitudinal axis. Favorably, the control surface of the standpipe and the corresponding contact element of the center tube may be oriented in parallel. Optionally, this orientation does not need to be exact. The control surface of the standpipe and the corresponding contact element of the center tube may advantageously be configured with similar inclination angles with respect to the longitudinal axis. Thus, a controlled rotary movement of the filter element may be achieved when the filter element is inserted into the second housing part.

The control surface of the standpipe as well as the contact element of the center tube do not need to be planar but could also exhibit curved surfaces. The control surface may be ring-shaped. Optionally, the control surface as well as the contact element may also be configured as nobs or ribs extending axially along the longitudinal axis as long as the nobs or ribs provide the shape of the control surface or the contact element.

According to a favorable embodiment of the filter system, the control surface of the stand pipe may be configured to cause a rotary movement of the filter element about the longitudinal axis when the filter element is inserted into the second housing part and moved in longitudinal axis towards the standpipe when the contact element of the center tube comes into contact with the control surface of the stand pipe. Advantageously, the filter element may be mounted in a controlled rotational orientation in the filter housing.

According to a favorable embodiment of the filter system, a longitudinal extension of the standpipe from a bottom surface to the maximum longitudinal extension of the control surface and/or an inclination angle of the control surface may be configured, such that when the filter element is inserted into the second housing part with the contact element of the center tube and the control surface of the standpipe in a fully engaged position, the center tube is moved from the first position to the second position. Thus, a favorable orientation of the filter element is possible without being hindered by the actuating element colliding with the second end cap.

According to a favorable embodiment of the filter system, the actuating element may be arranged in its engaged position with the component when the center tube is arranged in the second position. Thus, a component such as a valve, a sensor, a switch, an opening or the like may be cooperating with the actuating element when the filter element is mounted into the filter housing.

Further, a filter element for a filter system for filtering fluids, in particular a liquid filter system, is proposed, comprising a filter media body with an open interior extending along a longitudinal axis, comprising a first end cap and an opposing second end cap, being separated in the longitudinal axis, wherein the second end cap is configured with at least one positioning means, and comprising a center tube being arranged in the interior of the filter element, and being configured with an contact element, in particular being arranged inside the center tube, pointing to the second end cap and at least a second positioning means. The center tube is movable along the longitudinal axis from a first position to a second position inside the filter element. The center tube is in the first starting position where the second positioning means is engaged with the first positioning means of the second end cap or in the second end position where the second positioning means is released from the first positioning means.

The proposed filter element comprises a pre-assembled two-staged second end cap and center tube assembly part that enables alignment of the filter element to the filter housing by an inclined plane in the center tube orienting itself on the filter housing's standpipe's inclined control surface. After initial orientation of the filter element the second end cap disengages in the longitudinal axis from the center tube while still being prohibited from rotational movement compared to the center tube to not loose orientation. This allows e.g. a sealing pin as an actuating element on the second end cap to engage and seal a drainage pipe opening in the filter housing's bottom.

The second end cap is constantly being pushed downwards by the first filter housing part while it is turned and screwed into the second filter housing part. The force gets transferred by the filter media body to the end cap with the actuating element and after radial alignment of the filter element the center tube is moved away from the second end cap.

Thus, orientation of the filter element on the standpipe inside of the filter housing without any inward protruding pin on the center tube is achieved by rotating the whole filter element until the slanted control surface of the center tube is aligned flush with the slanted control surface of the standpipe.

The filter element is a serviceable part of the filter system.

The second end cap and the center tube may be a pre-assembled part of the filter element. Alternatively, the center tube may be loosely placed in the first end cap before mounting.

According to a favorable embodiment of the filter element, the second end cap may comprise an eccentrically positioned actuating element, the actuating element being configured for direct or indirect cooperation with a component when the filter element is arranged in an intended mounting position in the filter housing. In particular, the actuating element may be a sealing pin being configured for closing the drainage opening of the filter housing when the filter element is arranged in an intended mounting position in the filter housing. Optionally, the actuating element may be configured as an actuator and engage with a component such as a valve, a sensor, a switch, an opening or the like the when the filter element is mounted into the filter housing. The actuating element, e.g., may be configured for engagement in longitudinal direction or for engagement in transverse direction, for instance along a curved contour.

Favorably, after the rotational orientation is complete, a frictional or removably formed connection, e.g. slant or snap hock, between the end cap and the center tube allows for guided axial movement after orientation and thus sealing of a drainage opening with the axial actuating element on the end cap.

According to a favorable embodiment of the filter element, the first and second positioning means may be configured to engage by form fit and/or by force fit and/or by frictional locking. Thus, a stable connection between the center tube and the second end cap may be achieved for reliable mounting of the filter element to the filter housing.

According to a favorable embodiment of the filter element, the first positioning means of the second end cap and the second positioning means may be configured to form a latching connection, wherein one of the first and second positioning means provides at least one snap hook and the other one of the first and second positioning means is a corresponding snap hook receiver. In particular, one of the snap hook or the snap hook receiver may be configured with at least one protrusion and the other one of the snap hook receiver or the snap hook may be configured with at least one corresponding intrusion. By this way, a stable connection between the center tube and the second end cap may be achieved, wherein the center tube may easily be disconnected from the second end cap in order to reach its second position.

According to a favorable embodiment of the filter element, the first and second positioning means may be configured to be in engagement in the circumferential direction or in a radial direction. Thus, a stable connection between the center tube and the second end cap for mounting and orienting the filter element may be achieved.

According to a favorable embodiment of the filter element, the second end cap may be configured with at least two first positioning means opposing each other relative to the longitudinal axis and the central tube may be configured with at least two opposing corresponding second positioning means. Symmetric connection of the center tube and the second end cap may distribute engaging and disengaging forces.

According to a favorable embodiment of the filter element, at least one guiding element may be arranged at the second end cap extending along the longitudinal axis and being configured for engagement with at least one corresponding guiding slot of the center tube. Advantageously, a poka-yoke-orientation of the center tube and the second end cap is possible.

### Brief Description of the Drawings

The present invention together with the above-mentioned and other objects and advantages may best be understood from the following detailed description of the embodiments, but not restricted to the embodiments, wherein is shown in:
- Figure 1: a partly sectional view of a filter system for filtering fluids, in particular a liquid filter system, according to an embodiment of the invention, with a center tube in a first position, i.e. a starting position of the center tube;
- Figure 2: a partly isometric view of the filter system according to Fig. 1;
- Figure 3: a sectional view of the filter system according to Fig. 1;
- Figure 4: a sectional isometric view of the filter housing of the filter system;
- Figure 5: a partly sectional view of the filter system, with the center tube in a second position, i.e. an end position of the center tube;
- Figure 6: a partly isometric view of the filter system according to Fig. 5; and
- Figure 7: a sectional view of the filter system according to Fig. 5.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

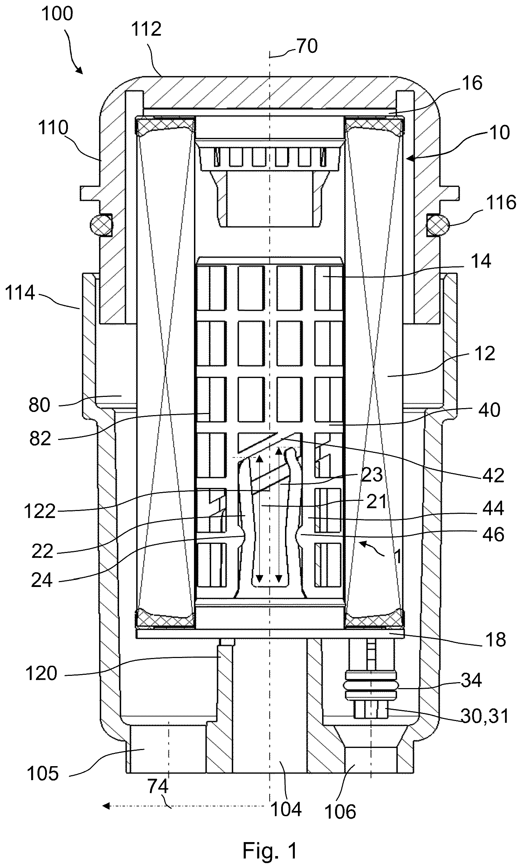

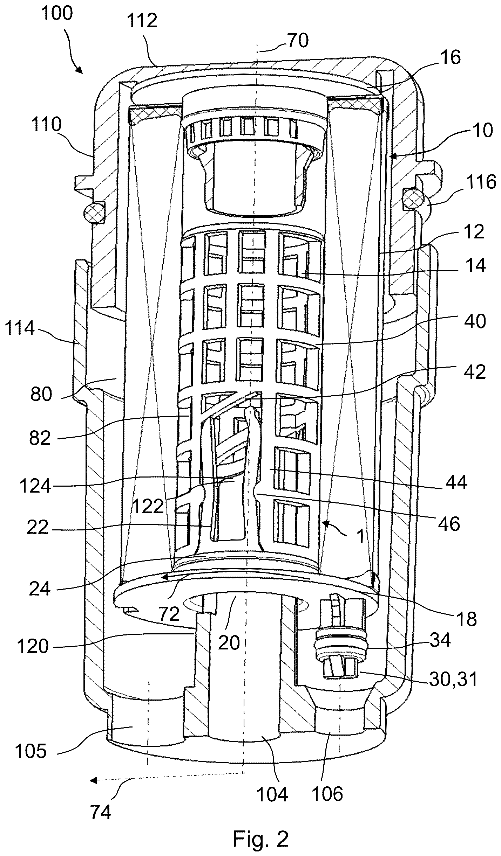

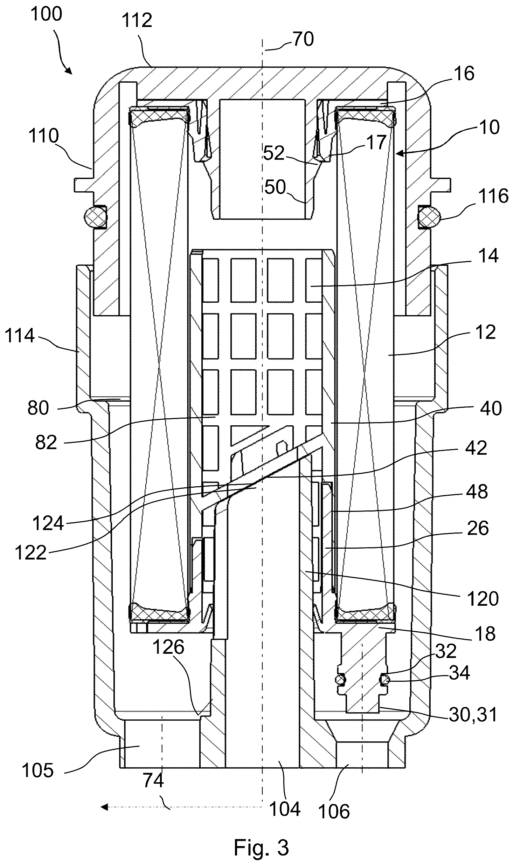

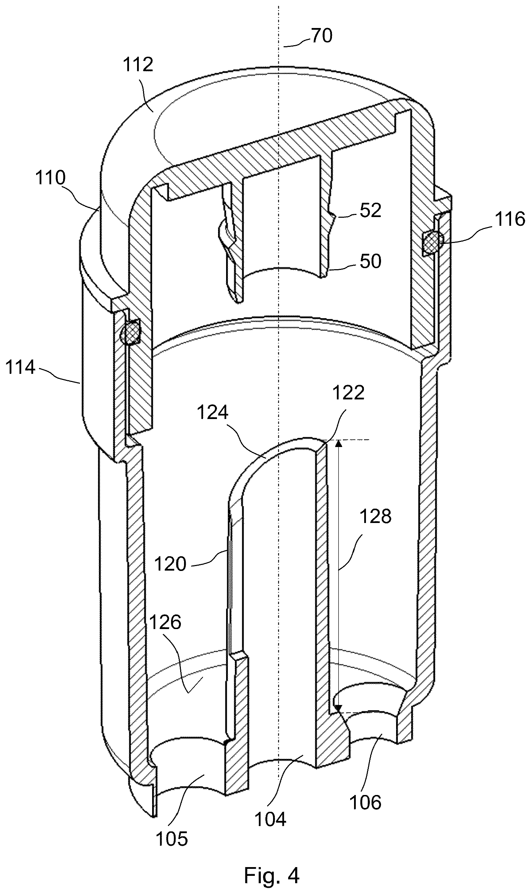

Figure 1 depicts a partly sectional view of a filter system 100 for filtering fluids, in particular a liquid filter system, according to an embodiment of the invention. In Figure 2 a partly isometric view of the filter system 100 is shown, whereas Figure 3 depicts a sectional view of the filter system 100. In Figure 4 a sectional isometric view of the filter housing 110 of the filter system 100 is depicted.

The filter system 100 may be, e.g. an oil filter system. The filter system 100 comprises a filter housing 110 having a longitudinal axis 70 with a first housing part 112 and a second housing part 114 arranged along the longitudinal axis 70. The filter housing 110 has a raw fluid inlet (105), a central fluid outlet 104 and an eccentric fluid drainage opening 106. The fluid outlet 104 and the fluid drainage opening 106 are arranged at the second housing part
114.

The second filter housing part 114 comprises a central standpipe 120 arranged above the fluid outlet 104, having a top portion 122. The top portion 122 provides a control surface 124. The control surface 124 is inclined with respect to the longitudinal axis 70.

The control surface 124 does not need to be planar, but could also exhibit a curved surface. The top portion 122 itself may be ring-shaped. The top portion 122 could also be configured as nobs or ribs extending axially along a longitudinal axis 70 as long as the nobs or ribs provide the shape of the inclined control surface 124.

Inside the filter housing 110 a filter element 10 is operably accommodated. The filter element 10 comprises a filter media body 12 with an open interior 14 extending along the longitudinal axis 70.

The filter element 10 further comprises a first end cap 16 and an opposing second end cap 18, which are separated in the longitudinal axis 70. At least the second end cap 18 is configured with a central opening 20. The second end cap 18 is configured with at least one positioning means 22 being arranged at the central opening 20. Alternatively, the at least one positioning means 22 may be arranged at an outer circumference of the second end cap 18.

During the filtering process the fluid is streaming from a raw side 80 radially outside of the filter media body 12 through the filter media body 12 to the clean side 82 in the interior 14 of the filter media body 12.

First and second end cap 16, 18 are sealing the raw side 80 of the filter system 100 against the clean side 82. The first end cap 16 is radially sealed against the fixation tube 50, whereas the second end cap 18 is radially sealed against the standpipe 120.

The second end cap 18 comprises an eccentrically positioned sealing pin 31 as an actuating element 30 for closing the drainage opening 106 when the filter element 10 is arranged in an intended mounting position in the filter housing 110. The drainage opening 106 serves for draining the rest of the raw fluid inside the second housing part 114 when the filter element 10 is withdrawn from the second housing part 114 for exchange of the filter element 10.

The sealing pin 31 which is inserted into the drainage opening 106 when the filter element 10 is in its intended mounting position inside the filter housing 110 is sealed with a radial sealant 34 being arranged in a radial sealing groove 32 around the sealing pin 31.

In an alternative, not depicted, embodiment the second end cap 18 may comprise an eccentrically positioned actuating element 30 other than a sealing pin 31. The actuating element 30 could be configured for direct or indirect cooperation with a component when the filter element 10 is arranged in an intended mounting position in the filter housing 110.

Thus, the actuating element 30 may be arranged in its engaged position with the component when the center tube 40 is arranged in the second position 2.

The filter element 10 further comprises a center tube 40. The center tube 40 is arranged in the interior 14 of the filter element 10 and comprises an contact element 42 for contacting the control surface 124 of the central standpipe 120 with a contact surface. In particular, the contact element 42 is arranged inside the center tube 40, pointing to the second end cap 18 and at least a second positioning means 44.

The center tube 40 is movable along the longitudinal axis 70 from a first starting position 1 to a second end position 2 inside the filter element 10. In Figures 1 to 3 the center tube 40 is in its first starting position 1.

In Figure 2 the end caps 16, 18 as well as the center tube 40 are not in a sectional view but shown isometrically.

With the center tube 40 being in the first starting position 1, the second positioning means 44 is engaged with the first positioning means 22 of the second end cap 18.

Alternatively, the center tube 40 can be in the second position 2 where the second positioning means 44 is released from the first positioning means 22.

The first and second positioning means 22, 44 may favorably be configured to engage by form fit and/or by force fit and/or by frictional locking.

The first positioning means 22 of the second end cap 18 and the second positioning means 44 are configured to form a latching connection. One of the first and second positioning means 22, 44 may provide at least one snap hook 24 and the other one of the first and second positioning means 22, 44 may be a corresponding snap hook receiver 46.

In the embodiment shown in Figures 1 to 3, the snap hook receiver 46 is configured with two protrusions and the snap hook 24 is configured with two corresponding intrusions.

The first and second positioning means 22, 44 are configured to be in engagement in the circumferential direction 70. Alternatively, the first and second positioning means 22, 44 may also be configured to be in engagement in a radial direction 74.

As may be seen from Figure 1, the axial heights 21, 23 of the two branches of the first positioning means 22 are different. This may be favorable for mounting the center tube 40 into the interior 14 of the filter media body 12, if the difference of the axial heights 21, 23 of the two branches of the first positioning means 22 correspond to the inclination of the contact element 42 of the second positioning means 44 of the center tube 40. Because of the different heights 21, 23 of the two branches of the first positioning means 22 the center tube 40 may only be mounted in one preferred orientation inside the filter media body 12.

The control surface 124 of the standpipe 120 and the contact surface of the corresponding contact element 42 of the center tube 40 have similar inclination angles with respect to the longitudinal axis 70. Favorably, the control surface 124 of the standpipe 120 and the corresponding contact element 42 of the center tube 40 may be oriented in parallel, but this orientation does not need to be exact. The control surface 124 of the standpipe 120 and the corresponding contact element 42 of the center tube 40 may advantageously be configured with similar inclination angles with respect to the longitudinal axis 70.

The control surface 124 as well as the contact element 42 do not need to be planar, but could also exhibit a curved surface. The top portion 122 itself does not need to be ring-shaped. The top portion 122 as well as the contact element 42 could also be configured as nobs or ribs extending axially along the longitudinal axis 70 as long as the nobs or ribs provide the shape of the control surface 124 and the contact element 42.

As may be seen from Figure 3, a guiding element 26 is arranged at the central opening 20 of the second end cap 18 extending along the longitudinal axis 70. The guiding element 26 is configured for engagement with a corresponding guiding slot 48 of the center tube 40. Thus, a poka-yoke-orientation of the center tube 40 and the second end cap 18 is possible.

In the embodiment shown, the first end cap 16 of the filter element 10 is configured with a central opening where a central fixation tube 50 of the first housing part 112 is inserted when the filter housing 110 is closed by the first housing part 112. The fixation tube 50 is configured with radially protruding fixation means 52 which engage with fixation counter means 17 of the first end cap 16. By this way the filter element 10 may be removed from the filter housing 110 by pulling the first housing part 112 in longitudinal axis 70 away from the second housing part 114.

In Figure 4 the first housing part 112 and the second housing part 114 are depicted in a mounted position, where the two housing parts 112, 114 are sealed by a radial sealant 116, e.g. an O-ring. The first housing part 112 e.g. may be screwed into the second housing part 114.

The central standpipe 120 being configured integral with the fluid outlet 104 has an inclined control surface 124 at the top portion 122.

The standpipe 120 of the present embodiment is configured as a solid pipe. Alternatively, the standpipe 120 could also exhibit a recess or could be slotted.

The control surface 124 does not need to be planar, but could also exhibit a curved surface. The top portion 122 itself does not need to be ring-like shaped. The top portion 122 could also be configured as nobs or ribs extending axially along the longitudinal axis 70 as long as the nobs or ribs provide the shape of the inclined control surface 124.

For this purpose, a longitudinal extension 128 of the standpipe 120 from a bottom surface 126 to the maximum longitudinal extension of the control surface 124 and/or an inclination angle of the control surface 124 may favorably be configured, such that when the filter element 10 is inserted into the second housing part 114 with the contact element 42 of the center tube 40 and the control surface 124 of the standpipe 120 in a fully engaged position, the center tube 40 is moved from the first position 1 to the second position 2, and the sealing pin 31 closing the drainage opening 106.

The first housing part 112 is configured with the central fixation element 50 comprising circumferential fixation means 52 for engaging with the opening of the first end cap 16 of the filter element.

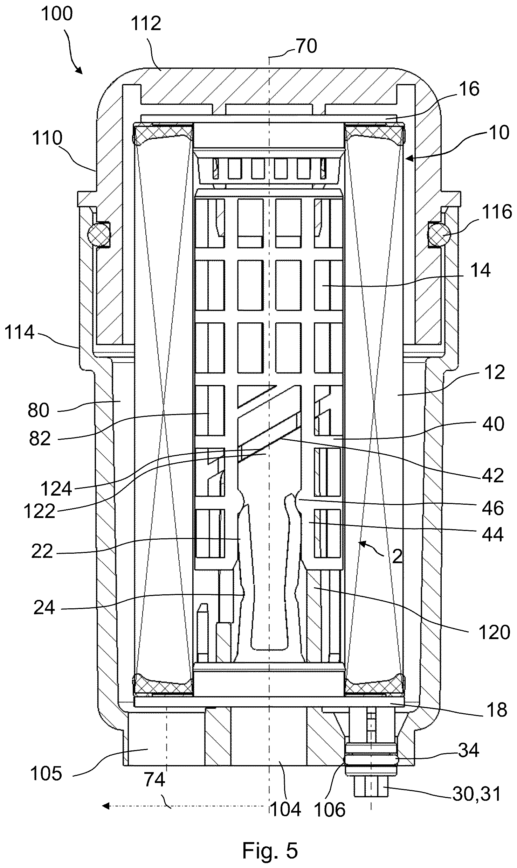

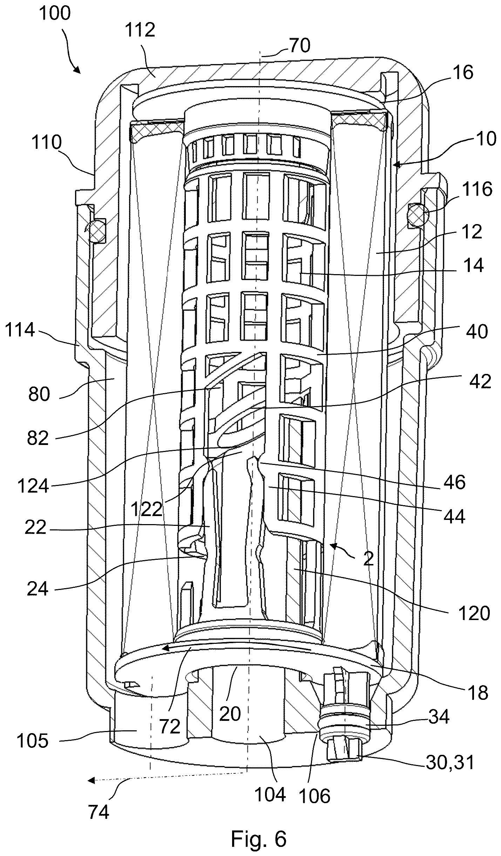

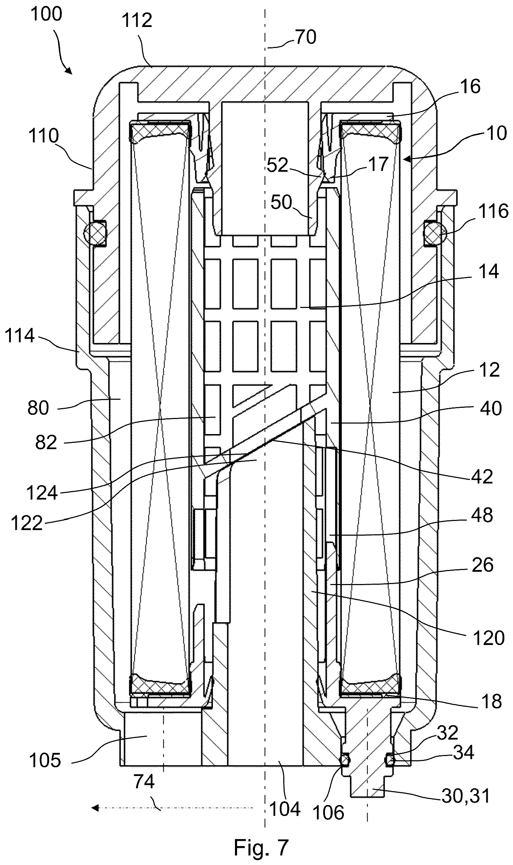

Figure 5 depicts a partly sectional view of the filter system 100, with the center tube 40 in the second end position 2. In Figure 6 a partly isometric view of the filter system 100 is shown, whereas in Figure 7 a sectional view of the filter system according to Fig. 5. Figures 5 to 7 correspond to Figures 1 to 3, but with the center tube 40 in the second end position 2.

When the filter element 10 is inserted with the center tube 40 in the first starting position 1 into the second housing part 114 and moved along the longitudinal axis 70 towards the standpipe 120, the control surface 124 of the stand pipe 120 causes a rotary movement of the filter element 10 about the longitudinal axis 70 when the contact element 42 of the center tube 40 comes into contact with the control surface 124 of the stand pipe 120. From pressure of the first housing part 112 on the filter element 10 being inserted into the second housing part 114 the second positioning means 44 of the center tube 40 is detached from the first positioning means 22. The center tube 40 is moved along the longitudinal axis 70 towards the first end cap 16.

The filter element 10 rotates in the filter housing 110 during the mounting process. As the rotational orientation of the control surface 124 of the standpipe 120 to the drainage opening 106 is predetermined and the rotational orientation of the contact element 42 of the center tube 40 to the second end cap 18 with the sealing pin 31 as a actuating element 30 is also predetermined it is thus possible to apply a desired rotational orientation to the filter in order to enable the sealing pin 31 to be inserted into the drainage opening 106 sealing the drainage opening 106 in a favorable manner for intended operation conditions of the filter system 100. The center tube 40 is moved during this orientation process from its first starting position 1 to its second end position 2.

In Figures 5 to 7 the filter element 10 is depicted in its intended mounting state in the filter housing 110. The center tube 40 is released from the first positioning means 22 of the second end cap 18, therefore being in the second end position 2.

### Reference Numbers

- 1: first starting position
- 2: second end position
- 10: filter element
- 12: filter media body
- 14: interior
- 16: first end cap
- 17: fixation counter means
- 18: second end cap
- 20: central opening
- 21: axial height
- 22: first positioning means
- 23: axial height
- 24: snap hook
- 26: guiding element
- 28: flange
- 30: actuating element
- 31: sealing pin
- 32: sealing groove
- 34: sealant
- 40: center tube
- 42: contact element
- 44: second positioning means
- 46: snap hook receiver
- 48: guiding slot
- 50: fixation tube
- 52: fixation means
- 70: longitudinal axis
- 72: circumferential direction
- 74: radial direction
- 80: raw side
- 82: clean side
- 100: filter system
- 104: fluid outlet
- 105: raw fluid inlet
- 106: drainage opening
- 110: filter housing
- 112: first housing part
- 114: second housing part
- 116: sealant
- 120: standpipe
- 122: top portion
- 124: control surface
- 126: bottom surface
- 128: longitudinal extension

## Claims

1. A filter system (100) for filtering fluids, in particular a liquid filter system, comprising
a filter housing (110) having a longitudinal axis (70), with a first housing part (112) and a second housing part (114) arranged along the longitudinal axis (70), having a raw fluid inlet (105), a central fluid outlet (104) and a component, in particular an eccentric fluid drainage opening (106), the fluid outlet (104) and the fluid drainage opening (106) being arranged at the second housing part (114), a central standpipe (120) arranged above the fluid outlet (104), having a top portion (122) providing a control surface (124), the control surface (124) being inclined with respect to the longitudinal axis (70),
a filter element (10) being operably accommodated in the filter housing (110), the filter element (10) comprising a filter media body (12) with an open interior (14) extending along the longitudinal axis (70),
the filter element (10) comprising a first end cap (16) and an opposing second end cap (18), being separated in the longitudinal axis (70),
wherein the second end cap (18) is configured with at least one positioning means (22),
the filter element (10) further comprising a center tube (40) being arranged in the interior (14) of the filter element (10), and comprising a contact element (42) for contacting the control surface (124) of the central standpipe (120) with a contact surface, in particular the contact element (42) being arranged inside the center tube (40), pointing to the second end cap (18) and at least a second positioning means (44), wherein the center tube (40) is movable along the longitudinal axis (70) from a first starting position (1) to a second end position (2) inside the filter element (10),
wherein the center tube (40) is in the first position (1) where the second positioning means (44) is engaged with the first positioning means (22) of the second end cap (18) or in the second position (2) where the second positioning means (44) is released from the first positioning means (22).

2. The filter system according to claim 1, wherein the second end cap (18) comprises an eccentrically positioned actuating element (30), the actuating element (30) being configured for direct or indirect cooperation with a component when the filter element (10) is arranged in an intended mounting position in the filter housing (110),
in particular, wherein the actuating element (30) is a sealing pin (31) being configured for closing the drainage opening (106) when the filter element (10) is arranged in an intended mounting position in the filter housing (110).

3. The filter system according to claim 1 or 2, wherein the control surface (124) of the standpipe (120) and the contact surface of the corresponding contact element (42) of the center tube (40) have similar, in particular the same, inclination angles with respect to the longitudinal axis (70).

4. The filter system according to any one of the preceding claims, wherein the control surface (124) of the stand pipe (120) is configured to cause a rotary movement of the filter element (10) about the longitudinal axis (70) when the filter element (10) is inserted into the second housing part (114) and moved along the longitudinal axis (70) towards the standpipe (120) when the inclined element (42) of the center tube (40) comes into contact with the control surface (124) of the stand pipe (120).

5. The filter system according to any one of the preceding claims, wherein a longitudinal extension (128) of the standpipe (120) from a bottom surface (126) to the maximum longitudinal extension of the control surface (124) and/or an inclination angle of the control surface (124) is configured, such that when the filter element (10) is inserted into the second housing part (114) with the contact element (42) of the center tube (40) and the control surface (124) of the standpipe (120) in a fully engaged position, the center tube (40) is moved from the first position (1) to the second position (2).

6. The filter system according to any one of the claims 2 to 5, wherein the actuating element (30) is arranged in its engaged position with the component when the center tube (40) is arranged in the second position (2).

7. A filter element (10) for a filter system (100) for filtering fluids, in particular a liquid filter system, in particular according to any one of the preceding claims, comprising a filter media body (12) with an open interior (14) extending along a longitudinal axis (70), comprising
a first end cap (16) and an opposing second end cap (18), being separated in the longitudinal axis (70),
wherein the second end cap (18) is configured with at least one positioning means (22),
and comprising
a center tube (40) being arranged in the interior (14) of the filter element (10), and being configured with an contact element (42), in particular being arranged inside the center tube (40), pointing to the second end cap (18) and at least a second positioning means (44), wherein the center tube (40) is movable along the longitudinal axis (70) from a first position (1) to a second position (2) inside the filter element (10),
wherein the center tube (40) is in the first starting position (1) where the second positioning means (44) is engaged with the first positioning means (22) of the second end cap (18) or in the second end position (2) where the second positioning means (44) is released from the first positioning means (22).

8. The filter element according to claim 7, wherein the second end cap (18) comprises an eccentrically positioned actuating element (30), the actuating element (30) being configured for direct or indirect cooperation with a component when the filter element (10) is arranged in an intended mounting position in the filter housing (110),
in particular, wherein the actuating element (30) is a sealing pin (31) being configured for closing a drainage opening (106) of a filter housing (110) when the filter element (10) is arranged in an intended mounting position in the filter housing (110).

9. The filter element according to claim 7 or 8, wherein the first and second positioning means (22, 44) are configured to engage by form fit and/or by force fit and/or by frictional locking.

10. The filter element according to any one of the claims 6 to 8, wherein the first positioning means (22) of the second end cap (18) and the second positioning means (44) are configured to form a latching connection, wherein one of the first and second positioning means (22, 44) provides at least one snap hook (24) and the other one of the first and second positioning means (22, 44) is a corresponding snap hook receiver (46),
in particular, wherein one of the snap hook (24) or the snap hook receiver (46) is configured with at least one protrusion and the other one of the snap hook receiver (46) or the snap hook (24) is configured with at least one corresponding intrusion.

11. The filter element according to any one of the claims 7 to 10, wherein the first and second positioning means (22, 44) are configured to be in engagement in the circumferential direction (72) or in a radial direction (74).

12. The filter element according to any one of the claims 7 to 11, wherein the second end cap (18) is configured with at least two first positioning means (22) opposing each other relative to the longitudinal axis (70) and wherein the central tube (40) is configured with at least two opposing corresponding second positioning means (44).

13. The filter element according to any one of the claims 7 to 12, wherein at least one guiding element (26) is arranged at the second end cap (18) extending along the longitudinal axis (70) and being configured for engagement with at least one corresponding guiding slot (48) of the center tube (40).

## Amended claims

### Amended claims in accordance with Rule 137(2) EPC.

1. A filter system (100) for filtering fluids, in particular a liquid filter system, comprising
a filter housing (110) having a longitudinal axis (70), with a first housing part (112) and a second housing part (114) arranged along the longitudinal axis (70), having
a raw fluid inlet (105),
a central fluid outlet (104) and
a component, in particular an eccentric fluid drainage opening (106), the fluid outlet (104) and the fluid drainage opening (106) being arranged at the second housing part (114),
a central standpipe (120) arranged above the fluid outlet (104), having a top portion (122) providing a control surface (124), the control surface (124) being inclined with respect to the longitudinal axis (70),
a filter element (10) being operably accommodated in the filter housing (110), the filter element (10) comprising a filter media body (12) with an open interior (14) extending along the longitudinal axis (70),
the filter element (10) comprising a first end cap (16) and an opposing second end cap (18), being separated in the longitudinal axis (70),
wherein the second end cap (18) is configured with at least one positioning means (22), and
the filter element (10) further comprising
a center tube (40) being arranged in the interior (14) of the filter element (10) and being configured with
a contact element (42) for contacting the control surface (124) of the central standpipe (120) with a contact surface pointing to the second end cap (18) and
at least a second positioning means (44),
the contact element (42) being arranged inside the center tube (40), wherein the center tube (40) is movable along the longitudinal axis (70) from a first starting position (1) to a second end position (2) inside the filter element (10), wherein the center tube (40) is in the first position (1) where the second positioning means (44) is engaged with the first positioning means (22) of the second end cap (18) or in the second position (2) where the second positioning means (44) is released from the first positioning means (22).

2. The filter system according to claim 1, wherein the second end cap (18) comprises an eccentrically positioned actuating element (30), the actuating element (30) being configured for direct or indirect cooperation with a component when the filter element (10) is arranged in an intended mounting position in the filter housing (110),
in particular, wherein the actuating element (30) is a sealing pin (31) being configured for closing the drainage opening (106) when the filter element (10) is arranged in an intended mounting position in the filter housing (110).

3. The filter system according to claim 1 or 2, wherein the control surface (124) of the standpipe (120) and the contact surface of the corresponding contact element (42) of the center tube (40) have similar, in particular the same, inclination angles with respect to the longitudinal axis (70).

4. The filter system according to any one of the preceding claims, wherein the control surface (124) of the stand pipe (120) is configured to cause a rotary movement of the filter element (10) about the longitudinal axis (70) when the filter element (10) is inserted into the second housing part (114) and moved along the longitudinal axis (70) towards the standpipe (120) when the inclined element (42) of the center tube (40) comes into contact with the control surface (124) of the stand pipe (120).

5. The filter system according to any one of the preceding claims, wherein a longitudinal extension (128) of the standpipe (120) from a bottom surface (126) to the maximum longitudinal extension of the control surface (124) and/or an inclination angle of the control surface (124) is configured, such that when the filter element (10) is inserted into the second housing part (114) with the contact element (42) of the center tube (40) and the control surface (124) of the standpipe (120) in a fully engaged position, the center tube (40) is moved from the first position (1) to the second position (2).

6. The filter system according to any one of the claims 2 to 5, wherein the actuating element (30) is arranged in its engaged position with the component when the center tube (40) is arranged in the second position (2).

7. A filter element (10) for a filter system (100) for filtering fluids, in particular a liquid filter system, comprising a filter media body (12) with an open interior (14) extending along a longitudinal axis (70), the filter element (10) comprising a first end cap (16) and an opposing second end cap (18), being separated in the longitudinal axis (70),
wherein the second end cap (18) is configured with at least one positioning means (22),
and the filter element (10) further comprising
a center tube (40) being arranged in the interior (14) of the filter element (10) and being configured with
a contact element (42) for contacting a control surface (124) of a central standpipe (120) of the filter system (100) with a contact surface pointing to the second end cap (18) and
at least a second positioning means (44),
the contact element (42) being arranged inside the center tube (40),
wherein the center tube (40) is movable along the longitudinal axis (70) from a first position (1) to a second position (2) inside the filter element (10), wherein the center tube (40) is in the first starting position (1) where the second positioning means (44) is engaged with the first positioning means (22) of the second end cap (18) or in the second end position (2) where the second positioning means (44) is released from the first positioning means (22).

8. The filter element according to claim 7, wherein the second end cap (18) comprises an eccentrically positioned actuating element (30), the actuating element (30) being configured for direct or indirect cooperation with a component when the filter element (10) is arranged in an intended mounting position in the filter housing (110),
in particular, wherein the actuating element (30) is a sealing pin (31) being configured for closing a drainage opening (106) of a filter housing (110) when the filter element (10) is arranged in an intended mounting position in the filter housing (110).

9. The filter element according to claim 7 or 8, wherein the first and second positioning means (22, 44) are configured to engage by form fit and/or by force fit and/or by frictional locking.

10. The filter element according to any one of the claims 7 to 9, wherein the first positioning means (22) of the second end cap (18) and the second positioning means (44) are configured to form a latching connection, wherein one of the first and second positioning means (22, 44) provides at least one snap hook (24) and the other one of the first and second positioning means (22, 44) is a corresponding snap hook receiver (46),
in particular, wherein one of the snap hook (24) or the snap hook receiver (46) is configured with at least one protrusion and the other one of the snap hook receiver (46) or the snap hook (24) is configured with at least one corresponding intrusion.

11. The filter element according to any one of the claims 7 to 10, wherein the first and second positioning means (22, 44) are configured to be in engagement in the circumferential direction (72) or in a radial direction (74).

12. The filter element according to any one of the claims 7 to 11, wherein the second end cap (18) is configured with at least two first positioning means (22) opposing each other relative to the longitudinal axis (70) and wherein the central tube (40) is configured with at least two opposing corresponding second positioning means (44).

13. The filter element according to any one of the claims 7 to 12, wherein at least one guiding element (26) is arranged at the second end cap (18) extending along the longitudinal axis (70) and being configured for engagement with at least one corresponding guiding slot (48) of the center tube (40).
